(19) Europäisches Patentamt
European Patent Office
Office européen des brevets

(11) Veröffentlichungsnummer: **0 458 137 A2**

(12) **EUROPÄISCHE PATENTANMELDUNG**

(21) Anmeldenummer: **91107562.0**

(22) Anmeldetag: **09.05.91**

(51) Int. Cl.5: **C08L 67/02**, C08K 5/5333, C08K 5/5357, //(C08L67/02, 27:18)

(30) Priorität: **22.05.90 DE 4016416**

(43) Veröffentlichungstag der Anmeldung: **27.11.91 Patentblatt 91/48**

(84) Benannte Vertragsstaaten: **DE FR GB IT**

(71) Anmelder: **BAYER AG**

**W-5090 Leverkusen 1 Bayerwerk(DE)**

(72) Erfinder: **Fuhr, Karl, Dr.**
**Krüllsdyk 55**
**W-4150 Krefeld(DE)**
Erfinder: **Müller, Friedemann, Dr.**
**Am Steinacker 5**
**W-4040 Neuss 21(DE)**
Erfinder: **Ott, Karl-Heinz, Dr.**
**Paul-Klee-Strasse 54**
**W-5090 Leverkusen 1(DE)**

(54) **Flammengeschützte, nichttropfende Polyalkylenterephthalat-Formmassen.**

(57) Die erfindungsgemäßen flammgeschützten, nicht tropfenden Polyalkylenterephthalat-Formmassen auf Basis von Phosphorsäureestern können verwendet werden zur Herstellung von Formkörpern. Durch den Zusatz der bestimmten Phosphorsäureester wird das Brandverhalten der Polyalkylenterephthalat-Formmassen verbessert, wobei insbesondere in Kombination mit hochwärmeformbeständigen Thermoplasten eine überraschende Reduzierung des Phosphorgehalts in den Formmassen erreicht wird.

EP 0 458 137 A2

Gegenstand der Erfindung sind flammgeschützte, nicht tropfende Polylalkylenterephthalat-Formmassen, die Ester von Säuren des Phosphors und Antidripping-Mittel sowie gegebenenfalls Thermoplaste mit überwiegend aromatischer Hauptkette und hoher Wärmeformbeständigkeit (Vicat B >180 °C), Verstärkungsmittel und weitere Additive enthalten.

Aus der DE-OS 2 458 967 sind flammgeschützte Polyestermassen bekannt, die ein Polylalkylenterephtalat, das in der Hauptkette Bindungseinheiten basierend auf bromierten aromatischen Verbindungen besitzt, sowie hochmolekulare organische Phosphorverbindungen enthalten. Die in der DE-OS 2 458 967 beschriebenen Polyestermassen besitzen den Nachteil, daß sie cokondensiert stets organisch gebundenes Brom enthalten und da es sich um Cokondensate handelt, wesentlich schwieriger herzustellen sind.

Aus der DE-OS 2 253 207 sind flammgeschützte thermoplastische Polyesterharzzusammensetzungen bekannt, die als flammhemmenden Zusatzstoff Arylphosphonate enthalten. Aus der DE-OS 2 111 202 sind ebenfalls flammgeschützte thermoplastische Polyester-Formmassen mit Polyarylphosphonaten bekannt, Die in diesen beiden Offenlegungsschriften beschriebenen flammhemmenden thermoplastischen Polyester-Formmassen zeigen jedoch den hohen Grad von Flammwidrigkeit gemäß Klassifikation V-O nach UL 94, wie er für den technischen Einsatz gefordert wird, nur in Dosierungen, die andere Produkteigenschaften, z.B. die Wärmeformbeständigkeit, beeinträchtigen.

Aus der DE-OS 2 132 350 sind phosphorhaltige Polyalkylenterephthalat-Formmassen mit flammwidrigen Eigenschaften bekannt, die als phosphorhaltige Zusätze sowohl Polylalkylphosphonate als auch Polyarylphosphonate enthalten können. In der genannten DE-OS 2 132 350 werden ferner Polyesterpreßharz-Mischungen aus Polypropylenterephthalat oder Polybutylenterephthalat beansprucht, die verstärkende Füllstoffe, wie Glasfasern, und Polyphosphonat oder Polyphosphonatphosphat enthalten. Die verstärkten Polyalkylenterephthalat-Preßharzmischungen zeigen mit diesen phosphorhaltigen Zusätzen keine ausreichende flammhemmende Brandschutzeigenschaft, da das Problem des Tropfens im Brandfall nicht gelöst ist. Außerdem besitzen die im vorgenannten Stand der Technik flammwidrig ausgestatteten Polyesterformmassen den Nachteil, daß sie um der geforderten Klassifikation nach UL-94 nachzukommen, einen relativ hohen Phosphorgehalt besitzen, was auch auf Kosten der Wärmeformbeständigkeit geht.

In US 3 697 459 und US 4 010 144 werden partiell mit Phosphorsäure veresterte Novolake nach Zusatz von Hexamethylendiamin als Imprägniermittel für schwerbrennbare Papiere beschrieben. In US 4 105 825 werden gemischte Phosphorsäureester von Novolaken und Phenolen als Flammschutzmittel für Polyolefine wie Polyethylen, Copolymere mit Polyethylen und ihre Blends beansprucht. Diese Polymere sind mit Peroxid vernetzt und enthalten große Mengen Füllstoff.

Gegenstand der Erfindung sind flammgeschützte, nicht tropfende Polyalkylenterephthalat-Formmassen, die auf 100 Gew.-Teile dieser Formmassen neben Polyalkylenterephthalat

A) 5 bis 30 Gew.-Teile, vorzugsweise 10 bis 25 Gew.-Teile, Ester von Säuren des Phosphors gemäß Formel (I)

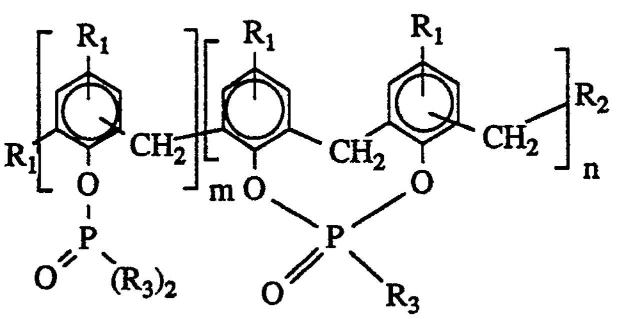

(I),

worin

$R_1$ für Wasserstoff, $C_1$-$C_8$-Alkyl, bevorzugt Methyl, $C_7$-$C_{12}$-Aralkyl, bevorzugt Benzyl und 1-Phenylethyl, und/oder für gegebenenfalls durch $C_1$-$C_4$-Alkyl substituiertes Phenyl, bevorzugt Phenyl,

$R_2$ für 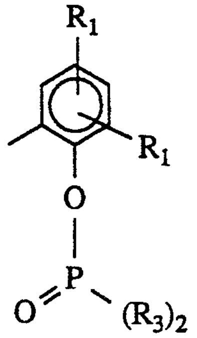 (II) oder 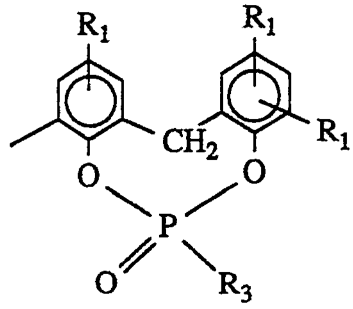 (III),

$R_3$ für gegebenenfalls durch $C_1$-$C_4$-Alkyl, $C_6$-$C_{10}$-Aryl oder $C_7$-$C_{12}$-Aralkyl substituiertes Phenoxy, bevorzugt Phenoxy, und/oder für $C_1$-$C_4$-Alkyl, bevorzugt Methyl und Ethyl, und/oder für $C_7$-$C_{12}$-Aralkyl, bevorzugt Benzyl und 1-Phenyl-ethyl, und/oder für gegebenenfalls durch $C_1$-$C_4$-Alkyl substituiertes Phenyl, bevorzugt Phenyl,

m für Null oder ganze Zahlen von 1 bis 12, bevorzugt 3 bis 8,

n für Null oder ganze Zahlen von 1 bis 5, bevorzugt 1 bis 3,

stehen, mit der Maßgabe, daß, wenn

m gleich 0 ist, n mindestens 1, bevorzugt 1 bis 3, ist und $R_2$ für (III) steht,

n gleich 0 ist, m mindestens 1, bevorzugt 2 bis 8, ist und $R_2$ für (II) steht,

und worin die Zahl der Phenylkerne der Formel (I) nicht höher als 12, bevorzugt 3 bis 8, ist, und

B) 0,01 bis 2,0 Gew.-Teile, vorzugsweise 0,2 bis 0,8 Gew.-Teile, eines Antidrippingmittels,

enthalten.

Die Polyalkylenterephthalate im Sinne der Erfindung sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäure und mindestens 80 Gew.-%, vorzugsweise mindestens 90 Mol-%, bezogen auf die Diolkomponente, Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexandimethanol-1,4, 3-Ethylpentandiol-2,4, 2-Methylpentandiol-2,4, 2,2,4-Trimethylpentandiol-1,3, 2-Ethythexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-ß-hydroxyethoxyphenyl)-propan und 2,2-Bis-(4-hydroxypropoxyphenyl)-propan (DE-OS 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-OS 1 900 270 und US-PS 3 692 744, verzweigt werden Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Mischungen enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-T1.) bei 25° C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

Die erfindungsgemäß eingesetzten Phosphorverbindungen (Komponente A)) sind die Phosphinsäure-, Phosphonsäure- und Phosphorsäureester von Bisphenolen und Novolaken (Polyphenole). Auch Estergemische sind möglich. Da die erfindungsgemäßen Säuren des Phosphors nicht direkt in die erfindungsgemäßen Ester umgewandelt werden können, sind reaktive Derivate zu verwenden. Diese sind Säurechloride, die durch Abspaltung von Chlorwasserstoff, und Phenylester (hergestellt aus den Säurechloriden), die durch Abspaltung von Phenol (Umesterung) mit den Polyphenolen zu den erfindungsgemäßen Estern umgesetzt werden.

Die erfindungsgemäß eingesetzten Phosphinsäureester sind die Dialkyl-, Diaryl- und Alkylarylphosphinsäureester von Bis- und Polyphenolen (Novolaken). Beispiele für Phosphinsäuren sind Dimethylphosphinsäure, Methylethylphosphinsäure, Diethylphosphinsäure, Methylphenylphosphinsäure, Ethylphenylphosphinsäure, Diphenylphosphinsäure, Di-p-Tolylphosphinsäure und Phenylnaphthylphosphinsäuresowie 1-Hydroxy-1-oxo-phospholin, 1-Hydroxy-1-oxo-3-methyl-phospholin und 1-Hydroxy-1-oxo-3,4-dimethyl-phospholin.

Herstellungsverfahren für Phosphinsäuren und ihre Derivate wie Chloride und Phenylester sind bekannt und in der Literatur zusammengestellt (Methoden der Organischen Chemie (Houben-Weyl), Band XII/1, Seiten 217-266, und Band E2, Seiten 123-221).

Die Umsetzung der Phosphinsäurechloride mit Bis- und Polyphenolen erfolgt bei Temperaturen von 180 bis 200 °C unter Abspaltung von Chlorwasserstoff recht langsam. Unter Mitverwendung von Katalysatoren wie Magnesiumchlorid gelingt dieses bereits bei niedrigeren Temperaturen und in kürzeren Zeiten. Bei niedrigeren Temperaturen müssen bei der Veresterung von Novolaken aus Gründen der Viskosität inerte, hochsiedende Lösungsmittel mitverwendet werden. Üblicherweise werden als Katalysatoren Magnesiumchlorid oder tertiäre Amine eingesetzt. Bei dem wesentlich schneller ablaufenden Umesterungsverfahren wird als Katalysator ebenfalls Magnesiumchlorid verwendet. Die Temperaturen liegen wieder bei 200 °C.

Die erfindungsgemäß eingesetzten Phosphonsäureester sind die Alkyl- und Arylphosphonsäureester von Phenolen und Bisphenolen bzw. Novolaken. Beispiele für Phosphonsäuren sind Methylphosphonsäure, Ethylphosphonsäure, Phenylphosphonsäure, p-Tolylphosphonsäure und Naphthylphosphonsäure.

Herstellungsverfahren für Phosphonsäuren und ihre Derivate wie Chloride und Phenylester sind bekannt und in der Literatur zusammengestellt (Ullmanns Enzyclopädie der Technischen Chemie, 4. Auflage, Bd. 18, Seiten 385-388, 1979 und Houben-Weyl, Methoden der Organischen Chemie, Band XII/1, Seiten 423-525).

Die erfindungsgemäß eingesetzten Phosphorsäureester sind die Phosphorsäureester von Bisphenolen bzw. Novolaken. Sie sind generell nach bekannten Verfahren herstellbar (US 4 105 825; Ullmanns Enzyclopädie der Technischen Chemie, 4. Auflage, Bd. 18, Seiten 389-391, 1979 und Houben-Weyl, Methoden der Organischen Chemie, Bd. 12/1, S. 299-374).

Geeignete Novolake sind Kondensationsprodukte aus Formaldehyd und Phenolen der allgemeinen Formel (IV),

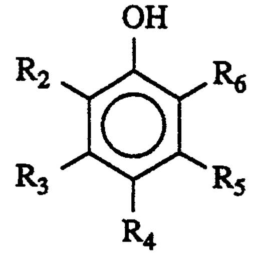

(IV)

worin $R_2$ und $R_6$ Wasserstoffatome und $R_3$, $R_4$ und $R_5$ wahlweise Wasserstoffatome, $C_1$-$C_8$-Alkyl-, Aralkyl-, und/oder Arylgruppen oder worin $R_2$ und $R_4$ Wasserstoffatome und $R_3$, $R_5$ und $R_6$ die soeben angeführten Reste sein können. Die aromatischen Reste selbst können durch $C_1$-$C_8$-Alkylgruppen substituiert sein.

Charakteristische Beispiele für Phenole sind, ohne damit eine Einschränkung zu treffen, Phenol, o-Kresol, m-Kresol, p-Kresol, 2,5-Dimethyl-, 3,5-Dimethyl-, 2,3,5-Trimethyl-, 3,4,5-Trimethyl-, o-Isopropyl-, p-Isopropyl-, m-Isopropyl-, p-t-Butyl-, p-n-Octylphenol sowie Benzyl-, 1-Phenylethyl- und Phenylphenole.

Bevorzugt eingesetzt werden Phenol, o-Kresol, m-Kresol, p-Kresol, p-t-Butylphenol und p-Octylphenol. Es können auch Gemische aus diesen Phenolen eingesetzt werden.

Bevorzugt eingesetzte Novolake sind demnach, ohne damit eine Einschränkung zu treffen:
Phenol/Formaldehyd-Novolak,
o-Kresol/Formaldehyd-Novolak,

m-Kresol/Formaldehyd-Novolak,
p-Kresol/Formaldehyd-Novolak,
t-Butylphenol/Formaldehyd-Novolak,
p-Octylphenol/Formaldehyd-Novolak.

Besonders bevorzugt wird der p-Kresol/Formaldehyd-Novolak. Die Herstellung der Novolake ist bekannt (Houben-Weyl, Methoden der Organischen Chemie, Band XIV/2, Seiten 193-292, und Ullmanns Enzyklopädie der Technischen Chemie, 4. Auflage, Band 18, Seiten 245-257).

Zur Herstellung der Phosphon- und Phosphorsäureester werden im sog. Umesterungsverfahren u.a. Novolake mit Diarylestern der Phosphonsäuren bzw. mit Triarylestern der Phosphorsäure und im sog. Säurechloridverfahren Gemische von Novolaken und Phenolen mit Phosphonsäurechloriden bzw. Phosphoroxichlorid zur Umsetzung gebracht. Beim Umesterungsverfahren wird bevorzugt Methyl- bzw. Phenylphosphonsäurediphenylester oder Triphenylphosphat eingesetzt. Bei beiden Verfahren können als zusätzliche oder andere Phenole Aryl- und Aralkylphenole wie 4-Phenylphenol, Benzylphenole, 1-Phenylethyl-phenole, 1-Methyl-1-phenylethylphenole und 2,4-Di-(1-phenylethyl)-phenol verwendet werden.

Als Besonderheit ist bei den Phosphon- und Phosphorsäureestern von Novolaken festzustellen, daß aufgrund der Mehrwertigkeit der Phosphonsäuren und der Phosphorsäure wie auch der von Novolaken sowohl offene als auch cyclische Strukturen auftreten können, je nachdem, ob jeweils eine Valenz oder 2 Valenzen beider Moleküle miteinander reagiert haben. Vernetzungsreaktionen aufgrund der Mehrwertigkeit der Reaktionspartner treten üblicherweise nicht auf.

Erfindungsgemäß geeignete Phosphorverbindungen gemäß Formel (I) sind beispielsweise die Umsetzungsprodukte aus 1 Mol Triphenylphosphat bzw. Phosphorsäuretrichlorid und 1 oder 2 Äquivalent Novolak. Mengenverhältnisse von 1 bis 2 Äquivalent Novolak sind ebenfalls möglich. Die 3. Valenz der Phosphorsäure ist, wie oben dargestellt, an Phenol oder ein substituiertes Phenol gebunden.

Als Komponente B) können eingesetzt werden Tetrafluorethylenpolymerisate, kolloidales Siliciumoxid und/oder Silikone. Diese Verbindungen fungieren als Antidrippingmittel.

Bevorzugt werden als Komponente B) Tetrafluorethylenpolymerisate mit Fluorgehalten von 65 bis 76 Gew.-%, vorzugsweise 70 bis 76 Gew.-%. Beispiele sind u.a. Polytetrafluorethylen, Tetrafluorethylen-Hexafluorpropylen-Copolymere, Tetrafluorethylen-Difluorethylen-Copolymere oder Tetrafluorethylen-Copolymerisate mit geringen Mengen fluorfreier copolymerisierbarer, ethylenisch ungesättigter Monomerer. Die Polymerisate sind bekannz Sie können in feinteiliger Form, gewöhnlich als Pulver, verwendet werden Sie können nach bekannten Verfahren hergestellt werden, so z.B. durch Polymerisation von Tetrafluorethylen in wäßrigem Medium mit einem freie Radikale bildenden Katalysator, z.B. Natrium-, Kalium- oder Ammoniumperoxidisulfat bei Drucken von 7 bis 71 $kg/cm^2$ und bei Temperaturen von 0 bis 200° C, vorzugsweise bei Temperaturen von 20 bis 100° C (nähere Einzelheiten s. z.B. US-Patents 2 393 967).

Die erfindungsgemäß geeigneten Polytetrafluorethylene sollen vorzugsweise Gewichtsmittelmolekulargewichte $\overline{M}w$ zwischen $10^5$ und $10^6$ haben.

Die Tetrafluorethylenpolymerisate werden bevorzugt in nicht gesinterter Form zugesetzt.

Als weitere Komponente der erfindungsgemäßen flammgeschützten Polyalkylenterephthalat-Formmassen kommen Thermoplaste, bevorzugt solche mit überwiegend aromatischer Hauptkette und mit hoher Wärmeformbeständigkeit (Vicat B >180° C) in Frage. Solche Thermoplaste sind beispielsweise Polysulfone, Polyethersulfone, Polyketone, Polyetherketone, Polyphenylenoxide und Polyarylensulfide. Diese Thermoplaste können selbstverständlich allein oder in Mischung untereinander eingesetzt werden, wobei das jeweilige Mischungsverhältnis leicht durch Vorversuche zu ermitteln ist und vom Einsatz- und Verwendungszweck der erfindungsgemäßen Formmassen abhängt. Diese Thermoplaste sind literaturbekannt und können nach den bekannten Verfahren hergestellt werden.

Die genannten Thermoplaste können in Mengen bis 30 Gew.-%, bevorzugt 1 bis 28 Gew.-%, insbesondere 3 bis 25 Gew.-%, eingesetzt werden.

Weiterhin können den erfindungsgemäßen Formmassen alle bekannten Verstärkungsmittel und Polymerzusatzstoffe bzw. -hilfsstoffe zugegeben werden. Die Menge dieser Additive richtet sich nach der jeweiligen Verwendung der Polymerformmassen. Die günstigste Menge kann leicht durch Vorversuche ermittelt werden. Als Zusatzstoffe werden anorganische Füllstoffe, Verstärkungsmittel, Pigmente und/oder Kristallisationshilfsmittel, weitere Flammschutzmittel, wie Stickstoff-, Halogen- und/oder andere Phosphorverbindungen, Verarbeitungshilfsmittel, wie Entformungsmittel, Stabilisatoren, Fließhilfmittel, UV-, Licht- und Thermostabilisatoren, bekannte Schlagzähigkeits- und/oder Verträglichkeitsverbesserer genannt.

Üblicherweise werden etwa 3 bis 40 Gew.-Teile, bevorzugt 5 bis 30 Gew.-Teile, an anorganischen Füllstoffen, Verstärkungshilfsmitteln und/oder Pigmenten zugesetzt. Die genannten weiteren Flammschutzmittel sowie die bekannten Schlagzähigkeits- und/oder Verträglichkeitsverbesserer werden in Mengen von ca 1 bis 20 Gew.-Teilen, vorzugsweise von 3 bis 15 Gew.-Teilen, mitverwendet Kristallisationshilfsmittel, UV-, Licht- und Thermostabilisatoren sowie Entformungsmittel, Fließhilfsmittel und Farbstoffe werden in Mengen von ca 0,1 bis 5 Gew.-Teilen, vorzugsweise von 0,5 bis 3 Gew.-Teilen, zugesetzt. Die Mengenangaben beziehen sich jeweils auf 100 Gew.-Teile der Gesamtformmasse.

Die gegebenenfalls einsetzbaren Verstärkungsmittel umfassen alle für die Verstärkung von Polyalkylenterephthalaten bekannten Mittel, z.B. werden genannt: Glasfasern, Glaskugeln und/oder minerslische Füllstoffe, wie in Katz und Milewski, "Handbook of Fillers and Reinforcements for Plastics", Nostrand-Verlag, 1978, beschrieben. Bevorzugt werden als anorganische Verstärkungsmittel Glasfasern eingesetzt. Die eingesetzten Glasfasern besitzen im allgemeinen einen Durchmesser von etwa 6 bis 15 µm, bevorzugt 8 bis 13 µm, und ein Längen- zu Dicken-Verhältnis von größer als 45, bevorzugt 50 bis 200.

Als weitere Füll- und Verstärkungsstoffe bzw. Farbpigmente kommen Mikroglaskugeln, Kohlefasern, Kreide, andere Erdalkalimetallcarbonate, Erdalkalimetalloxide, Quarz wie Novaculit, Silikate wie Asbest, Feldspalt, Glimmer, Talkum, Wollastonit und Kaolin in kalzinierter und nicht kalzinierter Form sowie als Pigmente z.B. Titandioxid und/oder Zinksulfid in Frage. Die eingesetzten mineralischen Füllstoffe besitzen mittlere Teilchendurchmesser von weniger als 20 µm, bevorzugt weniger als 10 µm, insbesondere 2 bis 8 µm. Sie können in geeigneter Weise oberflachenmodifiziert, z.B. mit Silanen behandelt, sein.

Als Kristallisationshilfsmittel kommen z.B. in Frage anorganische kristalline, hochschmelzende Verbindungen, die als Nukleierungsmittel wirksam sind, wie Mikro-Talk, Metallsalze von aliphatischen und/oder aromatischen nieder- oder hochmolekularen Carbonsäuren, die in WO 85/03717, EP 0 029 285, EP 0 037 666, EP 0 034 773, EP 0 112 167, EP 0 021 648, EP 0 102 768 beschrieben sind sowie Metallsalze von aliphatischen und/oder aromatischen Sulfonsäuren (EP 178 807).

Als weitere Flammschutzmittel können bromhaltige Verbindungen wie Hexabrombenzol, Pentabromtoluol, Octa- und Decabromdiphenyl, Hexabrom-bis-phenoxyethan, Ethylen-bis-tetrabromphthalimid und deren Gemische sowie bromierte Polystyrole (Pyro-Check-Typen der Ferro Corp., USA), bromiertes Polyphenylenoxid (PO-64 P der Great Lakes Chem. Corp., USA) verwendet werden.

Für die Flammschutzmittelkombinationen eignen sich besonders organische Phosphorverbindungen wie Phosphate und Phosphonate. Bevorzugt sind aromatische Phosphate, z.B. Triphenylphosphat und Dikresylphenylphosphat, außerdem Phosphonate wie Diphenylmethylphosphonat, Dikresylphosphonat.

Als weitere Flammschutzmittel können Metalloxide, z.B. Antimon(III)-oxid, Blei(IV)-oxid, Cer(IV)-oxid, Kupfer(II)-oxid, Molybdän(VI)-oxid, Vanadium(V)-oxid, Wismut(III)-oxid, Wolfram(VI)-oxid, Zinn(IV)-oxid und Zirkon(IV)-oxid, Zinkborat (Hydrate) sowie deren Mischungen zugesetzt werden.

Als Verarbeitungshilfsmittel können den erfindungsgemäßen Formmassen bekannte Entformungsmittel, Stabilisatoren, Fließhilfsmittel zugesetzt werden. Als Entformungsmittel können Esterwachse, z.B. Montanwachs, Amidwachs wie Rhenax® und/oder Oligoethylene verwendet werden. Als Weichmacher kommen z.B. aliphatische oligomere Polyester in Frage (s. EP 29 931 und DE 2 706 128).

Als Schlagzähmodifikatoren sind insbesondere Kautschuke wie Butadien-Acrylnitril-Copolymerisate, Butadien-Styrol-Copolymerisate, Butadien-Isopren- bzw. Butadien-Styrol-Blockcopolymerisate, Alkylacrylatkautschuke, EP- und EPDM-Kautschuksysteme sowie Silikonkautschuke geeignet. Vorzugsweise werden als Kautschukkomponente Pfropfkautschuke eingesetzt, bei denen Vinylhomo- oder Copolymerisate auf einem der vorgenannten Kautschuksysteme aufgepfropft sind, wobei die Glastemperatur der Pfropfgrundlage unterhalb -10 °C liegen sollte.

Die Herstellung der Mischungen aus thermoplastischem Polyalkylenterephthalat, Phosphorverbindungen, Antidripping-Mitteln und gegebenenfalls Thermoplasten mit überwiegend aromatischer Hauptkette und mit hoher Wärmeformbeständigkeit (Vicat B >180 °C), Verstärkungsmitteln sowie Verarbeitungshilfsmitteln kann in den üblichen Mischaggregaten, wie Walzen, Knetern, Ein- und Mehrwellenextrudern, erfolgen. Die Verarbeitungshilfsmittel können als Konzentrate in thermoplastische Polyester in Granulatform oder als Pulvermischung bei der Compoundierung der Komponenten zudosiert werden.

Das Herstellungsverfahren kann sowohl diskontinuierlich als auch kontinuierlich unter Bedingungen durchgeführt werden, bei denen eine Oxidation weitgehend ausgeschlossen ist, d.h. unter Schutzgasatmosphäre. Als Schutzgas eignet sich z.B. Stickstoff, Kohlendioxid und/oder Argon.

Die thermoplastische Verarbeitung der erfindungsgemäßen Formmassen zu Formkörpern kann bei Massetemperaturen bis 40 °C oberhalb des Polyesterschmelzpunktes (250 bis 290 °C) und bei Schmelzestandzeiten bis zu 9 min (1 bis 9 min) erfolgen. Bevorzugt werden Verarbeitungsbedingungen gewählt, bei denen die Massetemperaturen nicht höher als 270 °C und die Schmelzestandzeiten nicht höher als 9 min sind. Bei den besonders bevorzugten Verarbeitungsbedingungen liegen die Massetemperaturen nicht höher als 260 °C und die Schmelzestandzeiten nicht höher als 6 min.

Die Polymermischungen können gegebenenfalls einer thermischen Nachbehandlung in der festen Phase bei Temperaturen von 100 bis 200 °C, bevorzugt 180 bis 210 °C, unterzogen werden.

Die erfindungsgemäßen flammgeschützten Polyalkylenterephthalatformmassen können verwendet werden für die Herstellung von Formkörpern aller Art, Fasern oder Filmen.

Durch die Kombination der zuzugebenden, hochwärmeformbeständigen Thermoplasten mit den Estern von Phosphor enthaltenden Säuren läßt sich der Phosphorgehalt in den Massen beträchtlich senken Dieses überrascht umso mehr, da durch alleinige Zugabe von hochwärmeformbeständigen Thermoplasten der genannten Art zu Polyalkylenterephthalaten die technisch geforderte Flammwidrigkeit (z.B. entsprechend der Klassefikation nach UL-94) nicht erreicht wird. Es mußte daher auch erwartet werden, daß eine Kombination der hochwärmeformbeständigen Thermoplasten mit den genannten Phosphorverbindungen nicht über die flammhemmende Wirkung der Phosphorverbindungen hinausgehen würde. Es war umso überraschender, daß in einer solchen Kombination bei reduzierten Phosphorgehalten ein synergistischer Effekt im Hinblick auf hohe Flammwidrigkeit (UL-94/V-O) der Polymermassen erreicht wird (siehe Beispiele).

A. Eingesetzte Komponenten

I. Polyethylenterephthalat mit einer Intrinsic-Viskosität von 1,20 dl/g, gemessen in Phenol/o-Dichlorbenzol-Gemisch (Gewichtsverhältnis 1:1), 25° C, Ubbelohde-Viskosimeter (Granulat),
II. Polybutylenterephthalat mit einer Intrinsic-Viskosität von 1,20 dl/g, bestimmt wie unter I. beschrieben (Granulat),
III. Phosphinsäureester aus 1-Chlor-1-oxo-3-methylphospholin und 4,4'-Dihydroxidiphenylmethan (Molverhältnis 1:2),
IV. Phosphinsäureester aus Methylethylphosphinsäurechlorid und einem Novolak aus p-Kresol und Formaldehyd, Zahl der Phenolkerne (Kernzahl) etwa 5,
V. Phosphinsäureester aus 1-Chlor-1-oxo-3-methylphospholin und Novolak nach IV.,
VI. Phosphonsäureester aus 1 Mol Methylphosphonsäurediphenylester und 1 Äquivalent Novolak nach IV.,
VII. Phosphonsäureester aus 1 Mol Methylphosphonsäurediphenylester und 1,5 Äquivalent Novolak nach IV.,
VIII. Phosphonsäureester aus 1 Mol Methylphosphonsäurediphenylester und 2 Äquivalent Novolak nach IV.,
IX. Phosphorsäureester aus 1 Mol Triphenylphosphat und 1 Äquivalent Novolak nach IV.,
X. Phosphorsäureester aus 1 Mol Triphenylphosphat und 1,5 Äquivalent Novolak nach IV.,
XI. Phosphorsäureester aus 1 Mol Triphenylphosphat und 2 Äquivalent Novolak nach IV.,
XII. Polyphenylensulfid ungetempertes Material, frei von Zusatzstoffen, Schmelzfluß: 4000 bis 6000 g/10 min (MFI (melting flow index) nach ASTM D 1238, bestimmt bei 316° C, Auflagegewicht: 5 kg),
XIII. Polyethersulfon aus 4,4'-Dihydroxydiphenylsulfon und 4,4'-Dichlordiphenylsulfon mit einer Intrinsic-Viskosität von 0,38 dl/g, gemessen in Dimethylformamid, 25° C, Ubbelohde-Viskosimeter,
XIV. Polytetrafluorethylen-Pulver, Hostaflon TF 2027 der Firma Hoechst AG,
XV. Kurzglasfaser, Typ OCF 429 YZ, der Owens Corning, Italien,
XVI. E-Wachs (pulverförmig),
XVII. Bariumsulfat, Blanc fix micro der Sachtleben AG,
XVIII. Oligomeres Carbonat aus Tetrabrombisphenol A, Great Lakes BC-52-HP der Firma Great Lakes Chem. Corp., USA,
XIX. Bromhaltiges Polymer, F-2400 der Makhteshim LTD, Israel.

B. Herstellung der verwendeten Phosphoradditive

1. Phosphinsäureester aus 1-Chlor-1-oxo-3-methyl-phospholin und Bisphenol F (4,4'-Dihydroxy-diphenylmethan)

200,2 g (1 Mol) Bisphenol F werden in einem 1-l-Kolben mit Heizbad, Rührer, Glaseinleitungsrohr für Stickstoff, Tropftrichter und Rückflußkühler unter Stickstoff auf 170 bis 180° C erhitzt. Dann werden in 2 Std. 301,1 g (2 Mol) 1-Chlor-1-oxo-3-methylphospholin zugetropft Nach 18 Std. ist die Chlorwasserstoffentwicklung abgeschlossen.

Nach Abkühlen wird der noch warme Ester in 1 l Methylenchlorid aufgenommen und mit Wasser chloridfrei gewaschen. Nach Trocknen der Methylenchloridlösung wird das Natriumsulfat abfiltriert und die Lösung eingeengt. Die Ausbeute beträgt 397,1 g = 88,5 % der Theorie. Das Produkt ist harzig. Der Phosphorgehalt liegt bei 13,8 % (theoretisch 14,5 %), die OH-Zahl bei <10.

2. Phosphinsäureester aus Methylethylphosphinsäurechlorid und einem Novolak aus p-Kresol

239,7 g (2 Grammäquivalent) eines Novolaks aus p-Kresol und Formaldehyd (OH-Zahl 468, Kernzahl ca

5) und 5,7 g (0,06 Mol) Magnesiumchlorid werden in einem 2-l-Kolgen mit Heizbad, Rührer, Gaseinleitungsrohr für Stickstoff, Tropftrichter und Rückflußkühler unter Stickstoff auf 190 bis 200° C erhitzt. Dann werden in 1 Std. 253,1 g (2 Mol) Methylethylphosphinsäurechloridzugetropft. Nach 72 Std. ist die Chlorwasserstoffentwicklung abgeschlossen.

Nach Abkühlen wird der noch warme Ester in 2 1 Methylenchlorid aufgenommen und mit Wasser chloridfrei gewaschen. Nach Trocknen der Methylenchloridlösung wird das Natriumsulfat abfiltriert und die Lösung eingeengt. Die Ausbeute beträgt 402,4 g = 95,8 % der Theorie. Der Erweichungsbeginn liegt bei 98° C auf der Kofler-Heizbank, der Phosphorgehalt bei 13,4 % (theoretisch 14,7 %) und die OH-Zahl bei 0.

3. Phosphinsäureester aus 1-Chlor-1-oxo-3-methyl-phospholin und einem Novolak aus p-Kresol

240,3 g (2 Grammäquivalent) eines Novolaks aus p-Kresol und Formaldehyd (OH-Zahl 468, Kernzahl ca 5) und 301,1 g (2 Mol) 1-Chlor-1-oxo-3-methyl-phospholin werden wie unter 2. zur Umsetzung gebracht. Die Aufarbeitung erfolgt ebenfalls wie unter 2..

Die Ausbeute beträgt 437,1 g = 93,3 % der Theorie. Der Erweichungsbeginn liegt bei 136° C, der Phosphorgehalt bei 12,6 % (theoretisch 13,2 %) und die OH-Zahl bei 0.

4. Phosphonsäureester aus 1 Mol Methylphosphonsäurediphenylester und 1 Äquivalent Novolak (aus p-Kresol, Kernzahl ca 5)

1241,1 g (5 Mol) Methylphosphonsäurediphenylester, 615,2 g (5 Grammäquivalent) eines Novolaks aus p-Kresol und Formaldehyd (OH-Zähl 456, Kernzahl ca 5) und 2,5 ml einer 1 %igen Titantetrabutylat-Lösung in Chlorbenzol werden in einem 4 1-Kolben, der mit regelbarer Pilzheizhaube, Kapillare und kurzer Vigreux-Kolonne mit absteigendem Kühler versehen ist, nach Aufschmelzen 0,5 Std. lang bei einem Vakuum von 300 mbar bei 200° C erhitzt. Der über die Kapillare eingeleitete Stickstoffstrom sorgt für gute Durchmischung. Anschließend werden in 3 Stdn. bei fallendem Vakuum von 300 bis 3 mbar und Temperaturen von 190 bis 210° C über Kolonne und Kühler 504,4 g Produkt (OH-Zahl 541) abdestilliert (5 Mol Phenol: 470,6 g). Anschließend wird 1 Std. bei 210° C und einem Vakuum von 3 mbar ausgeheizt.

Nach Abkühlen wird das Reaktionsprodukt in 4 1 Methylenchlorid aufgenommen und mit Wasser chloridfrei gewaschen. Nach Trocknen der Methylenchlorid-Lösung mit Natriumsulfat wird filtriert und die Lösung eingeengt. Die Ausbeute beträgt 1327,4g = 95,8% der Theorie. Das Produkt ist harzig; der Phosphorgehalt liegt bei 10,7 % (theoretisch 11,2 %) und die OH-Zahl bei 0.

5. Phosphonsäureester aus 1 Mol Methylphosphonsäurediphenylester und 1,5 Äquivalent Novolak (aus p-Kresol, Kernzahl ca. 5)

992,9 g (4 Mol) Methylphosphonsäurediphenylester, 738,2 g (6 Grammäquivaent) eines Novolaks aus p-Kresol und Formaldehyd (OH-Zahl 456, Kernzahl ca 5) und 2,0 mi einer 1 %igen Titantetrabutylat-Lösung in Chlorbenzol werden in einem 4 l-Kolben, der mit regelbarer Pilzheizhaube, Kapillare und kurzer Vigreux-Kolonne mit absteigendem Kühler versehen ist, nach Aufschmelzen 0,5 Std. lang bei einem Vakuum von 300 mbar bei 200° C erhitzt. Der über die Kapillare eingeleitete Stickstoffstrom sorgt für gute Durchmischung. Anschließend werden in 3,5 Stdn. bei fallendem Vakuum von 300 bis 3 mbar und Temperaturen von 190 bis 210° C über Kolonne und Kühler 573,2 g Produkt (OH-Zahl 586) abdestilliert (6 Mol Phenol: 564,6 g). Anschließend wird 1 Std. bei 220° C und einem Vakuum von 3 mbar ausgeheizt.

Nach Abkühlen wird das Reäktionsprodukt in 4 l Methylenchlorid aufgenommen und mit Wasser chloridfrei gewaschen. Nach Trocknen der Methylenchlorid-Lösung mit Natriumsulfat wird filtriert und die Lösung eingeengt. Die Ausbeute beträgt 1100,0 g = 94,3 % der Theorie. Der Erweichungsbeginn liegt auf der Kofler-Heizbank bei 106° C, der Phosphorgehalt beläuft sich auf 10,1 % (theoretisch 10,6 %) und die OH-Zahl auf 0.

6. Phosphonsäureester aus 1 Mol Methylphosphonsäurediphenylester und 2 Äquivalent Novolak (aus p-Kresol, Kernzahl ca. 5)

868,8 g (3,5 Mol) Methylphosphonsäurediphenylester, 861,2 g (7 Grammäquivalent) eines Novolaks aus p-Kresol und Formaldehyd (OH-Zahl 456, Kernzahl ca. 5) und 2 ml einer 0,5 %igen Titantetrabutylat-Lösung in Chlorbenzol werden in einem 4 l-Kolben, der mit regelbarer Pilzheizhaube, Kapillare und kurzer Vigreux-Kolonne mit absteigendem Kühler versehen ist, nach Aufschmelzen 0,5 Std. lang bei einem Vakuum von 300 mbar bei 200° C erhitzt. Der über die Kapillare eingeleitete Stickstoffstrom sorgt für gute Durchmischung. Anschließend werden in 4 Stdn. bei fallendem Vakuum von 300 bis 3 mbar und Temperaturen von 190 bis 210° C über Kolonne und Kühler 649,9 g Produkt (OH-Zahl 586) abdestilliert (7 Mol Phenol: 658,7 g). Anschließend wird 1 Std. bei 220° C und einem Vakuum von 3 mbar ausgeheizt.

Nach Abkühlen wird das Reaktionsprodukt in 4 l Methylenchlorid aufgenommen und mit Wasser chloridfrei gewaschen. Nach Trocknen der Methylenchlorid-Lösung mit Natriumsulfat wird filtriert und die Lösung eingeengt. Die Ausbeute beträgt 1032,7 g) 96,4 % der Theorie. Der Erweichungsbeginn liegt auf

der Kofler-Heizbank bei 166° C, der Phosphorgehalt beläuft sich auf 10,1 % (theoretisch 10,0 %) und die OH-Zahl auf 4.

7. Phosphorsäureester aus 1 Mol Triphenylphosphat und 1 Äquivalent Novolak (aus p-Kesol, (Kernzahl ca. 5)

1631,5 g (5 Mol) Triphenylphosphat, 599,5 g (5 Grammäquivalent) eines Novolaks aus p-Kresol und Formaldehyd (OH-Zahl 468, Kernzahl ca. 5) und 14,3 g Magnesiumchlorid (0,15 Mol) werden in einem 4 l-Kolben, der mit regelbarer Pilzheizhaube, Kapillare und kurzer Vigreux-Kolonne mit absteigendem Kühler versehen ist, nach Aufschmelzen 0,5 Std. lang bei einem Vakuum von 300 mbar bei 200° C erhitzt. Der über die Kapillare eingeleitete Stickstoffstrom sorgt für gute Durchmischung. Anschließend werden in 3 Stdn. bei fallendem Vakuum von 300 bis 3 mbar und Temperaturen von 200 bis 210° C über Kolonne und Kühler 482,5 g Produkt (OH-Zahl 583) abdestilliert (5 Mol Phenol: 470,6 g). Anschließend wird 1 Std. bei 210° C und einem Vakuum von 3 mbar ausgeheizt.

Nach Abkühlen wird das Reaktionsprodukt in 4 l Methylenchlorid aufgenommen und mit Wasser chloridfrei gewaschen. Nach Trocknen der Methylenchlorid-Lösung mit Natriumsulfat wird filtriert und die Lösung eingeengt. Die Ausbeute beträgt 1693,7 g = 96,2 % der Theorie. Das Produkt ist harzig, der Phosphorgehalt liegt bei 8,9 % (theoretisch 8,8 %) und die OH-Zahl bei 4.

8. Phosphorsäureester aus 1 Mol Triphenylphosphat und 1,5 Äquivalent Novolak (aus p-Kresol, Kernzahl ca. 5)

1305,2 g (4 Mol) Triphenylphosphat, 719,4 g (6 Grammäquivalent) eines Novolaks aus p-Kresol und Formaldehyd (OH-Zahl 468, Kernzahl ca. 5) und 11,4 g Magnesiumchlorid (0,12 Mol) werden in einem 4 l-Kolben, der mit regelbarer Pilzheizhaube, Kapillare und kurzer Vigreux-Kolonne mit absteigendem Kühler versehen ist, nach Aufschmelzen 0,5 Std. lang bei einem Vakuum von 300 mbar bei 200° C erhitzt. Der über die Kapillare eingeleitete Stickstoffstrom sorgt für gute Durchmischung. Anschließend werden in 3,5 Stdn. bei fallendem Vakuum von 300 bis 3 mbar und Temperaturen von 200 bis 210° C über Kolonne und Kühler 580,4 g Produkt (OH-Zahl 578) abdestilliert (6 Mol Phenol: 564,6 g). Anschließend wird 1 Std. bei 210° C und einem Vakuum von 3 mbar ausgeheizt. Nach Abkühlen wird das Reaktionsprodukt in 4 l Methylenchlorid aufgenommen und mit Wasser chloridfrei gewaschen. Nach Trocknen der Methylenchlorid-Lösung mit Natriumsulfat wird filtriert und die Lösung eingeengt. Die Ausbeute beträgt 1378,6 g = 94,3 % der Theorie. Der Erweichungsbeginn liegt auf der Kofler-Heizbank bei 72° C, der Phosphorgehalt beläuft sich auf 9,0 % (theoretisch 8,5 %) und die OH-Zahl auf 0.

9. Phosphorsäureester aus 1 Mol Triphenylphosphat und 2 Äquivalent Novolak (aus p-Kresol, Kernzahl ca. 5)

1142,0 g (3,5 Mol) Triphenylphosphat, 839,3 g (7 Grammäquivalent) eines Novolaks aus p-Kresol und Formaldehyd (OH-Zahl 468, Kernzahl ca. 5) und 10,0 g Magnesiumchlorid (0,09 Mol) werden in einem 4 l-Kolben, der mit regelbarer Pilzheizhaube, Kapillare und kurzer Vigreux-Kolonne mit absteigendem Kühler versehen ist, nach Aufschmelzen 0,5 Std. lang bei einem Vakuum von 300 mbar bei 200° C erhitzt. Der über die Kapillare eingeleitete Stickstoffstrom sorgt für gute Durchmischung. Anschließend werden in 4 Stdn. bei fallendem Vakuum von 300 bis 3 mbar und Temperaturen von 200 bis 210° C über Kolonne und Kühler 681,7 g Produkt (OH-Zahl 550) abdestilliert (7 Mol Phenol: 658,7 g). Anschließend wird 1 Std. bei 210° C und einem Vakuum von 3 mbar ausgeheizt. Nach Abkühlen wird das Reaktionsprodukt in 4 l Methylenchlorid aufgenommen und mit Wasser chloridfrei gewaschen. Nach Trocknen der Methylenchlorid-Lösung mit Natriumsulfat wird filtriert und die Lösung eingeengt. Die Ausbeute beträgt 1304,7 g = 98,6 % der Theorie. Der Erweichungsbeginn liegt auf der Kofler-Heizbank bei 141° C, der Phosphorgehalt beläuft sich auf 8,2 % (theoretisch 8,2 %) und die OH-Zahl auf 0.

C. Herstellung, Verarbeitung und Prüfung der Formmassen

Die eingesetzten Komponenten werden in den in Tabelle 1 angegebenen Mengen in einem Zweiwellenextruder geschmolzen, vermischt und zu Strängen extrudiert und granuliert Die Herstellung der Formmassen kann z.B. mit einem Extruder, ZSK 32 der Firma Werner & Pfleiderer, bei Massetemperaturen von 270 bis 280° C und bei einer Schneckendrehzahl von 130 U/min sowie einem Durchsatz von 8 kg/h erfolgen.

Nach ausreichender Trocknung (z.B. 3 bis 4 h bei 120° C) werden die Formmassen auf üblichen Spritzgießmaschinen bei Massetemperaturen von 250 bis 270° C, einer Formtemperatur von 80 bis 130° C und einer Schmelzestandzeit von nicht länger als 9 min zu Formkörpern bzw. Normprüfstäben verspritzt und folgenden Tests unterzogen:

- Bestimmung des Phosphorgehalts (Elementaranalyse, %P),
- Beurteilung des Tropfverhaltens,
- Brandtest nach Vorschrift Underwriter Laboratories (UL-94).

Tabelle 2 zeigt die erhaltenen Prüfdaten.

Tabelle 1: Eingesetzte Komponenten (Angaben in Gew.-%)

| Komponente | I. | II. | III. | IV. | V. | XII. | XIII. | XIV. | XV. | XVI. | XVII. | XVIII. | XIX. |
|---|---|---|---|---|---|---|---|---|---|---|---|---|---|
| Beispiel 1 | 64,8 | | 12,5 | | | | | 0,4 | 20,0 | 0,3 | 2,0 | | |
| Beispiel 2 | 64,8 | | | 12,5 | | | | 0,4 | 20,0 | 0,3 | 2,0 | | |
| Beispiel 3 | 64,8 | | | | 12,5 | | | 0,4 | 20,0 | 0,3 | 2,0 | | |
| Beispiel 4 | 57,3 | | | | 10,0 | 10,0 | | 0,4 | 20,0 | 0,3 | 2,0 | | |
| Beispiel 5 | 57,3 | | | | 10,0 | | 10,0 | 0,4 | 20,0 | 0,3 | 2,0 | | |
| Beispiel 6 | 61,3 | | | | 10,0 | | | 0,4 | 20,0 | 0,3 | 2,0 | 6,0 | |
| Beispiel 7 | 59,8 | | | | 10,0 | | | 0,4 | 20,0 | 0,3 | 2,0 | | 7,5 |
| Beispiel 8 | | 57,3 | | | 10,0 | 10,0 | | 0,4 | 20,0 | 0,3 | | | |
| Beispiel 9 | | 57,3 | | | 10,0 | | 10,0 | 0,4 | 20,0 | 0,3 | | | |
| Beispiel 10 | | 57,3 | | | 10,0 | | | 0,4 | 20,0 | 0,3 | | 10,0 | |
| Beispiel 11 | | 55,3 | | | 10,0 | | | 0,4 | 20,0 | 0,3 | | | 12,0 |
| Beispiel 12 | | 52,3 | | | 10,0 | | 10,0 | 0,4 | 20,0 | 0,3 | | 5,0 | |

Tabelle 1: Eingesetzte Komponenten (Angaben in Gew.-%), Fortsetzung

| Komponente | I. | II. | VI. | VII. | VIII. | XII. | XIII. | XIV. | XV. | XVI. | XVII. | XVIII. | XIX. |
|---|---|---|---|---|---|---|---|---|---|---|---|---|---|
| Beispiel 13 | 62,3 | | 15,0 | | | | | 0,4 | 20,0 | 0,3 | 2,0 | | |
| Beispiel 14 | 62,3 | | | 15,0 | | | | 0,4 | 20,0 | 0,3 | 2,0 | | |
| Beispiel 15 | 62,3 | | | | 15,0 | | | 0,4 | 20,0 | 0,3 | 2,0 | | |
| Beispiel 16 | 57,3 | | | | 10,0 | 10,0 | | 0,4 | 20,0 | 0,3 | 2,0 | | |
| Beispiel 17 | 57,3 | | | | 10,0 | | 10,0 | 0,4 | 20,0 | 0,3 | 2,0 | | |
| Beispiel 18 | 61,3 | | | | 10,0 | | | 0,4 | 20,0 | 0,3 | 2,0 | 6,0 | |
| Beispiel 19 | 59,8 | | | | 10,0 | | | 0,4 | 20,0 | 0,3 | 2,0 | | 7,5 |
| Beispiel 20 | | 54,3 | 15,0 | | | 10,0 | | 0,4 | 20,0 | 0,3 | | | |
| Beispiel 21 | | 54,3 | | 15,0 | | 10,0 | | 0,4 | 20,0 | 0,3 | | | |
| Beispiel 22 | | 54,3 | | | 15,0 | 10,0 | | 0,4 | 20,0 | 0,3 | | | |
| Beispiel 23 | | 57,3 | 10,0 | | | | | 0,4 | 20,0 | 0,3 | | 12,0 | |
| Beispiel 24 | | 57,3 | | | 10,0 | | | 0,4 | 20,0 | 0,3 | | 12,0 | |
| Beispiel 25 | | 53,3 | | | 10,0 | | 10,0 | 0,4 | 20,0 | 0,3 | | 6,0 | |

Tab elle 1: Eingesetzte Komponenten (Angaben in Gew.-%), Fortsetzung

| Komponente | I. | II. | IX. | X. | XI. | XII. | XIII. | XIV. | XV. | XVI. | XVII. | XVIII. | XIX. |
|---|---|---|---|---|---|---|---|---|---|---|---|---|---|
| Beispiel 26 | 62,3 | | 15,0 | | | | | 0,4 | 20,0 | 0,3 | 2,0 | | |
| Beispiel 27 | 62,3 | | | 15,0 | | | | 0,4 | 20,0 | 0,3 | 2,0 | | |
| Beispiel 28 | 62,3 | | | | 15,0 | | | 0,4 | 20,0 | 0,3 | 2,0 | | |
| Beispiel 29 | 57,3 | | | | 10,0 | 10,0 | | 0,4 | 20,0 | 0,3 | 2,0 | | |
| Beispiel 30 | 57,3 | | | | 10,0 | | 10,0 | 0,4 | 20,0 | 0,3 | 2,0 | | |
| Beispiel 31 | 61,3 | | | | 10,0 | | | 0,4 | 20,0 | 0,3 | 2,0 | 6,0 | |
| Beispiel 32 | 59,8 | | | | 10,0 | | | 0,4 | 20,0 | 0,3 | 2,0 | | 7,5 |
| Beispiel 33 | | 49,4 | 20,0 | | | 10,0 | | 0,4 | 20,0 | 0,3 | | | |
| Beispiel 34 | | 49,4 | | 20,0 | | 10,0 | | 0,4 | 20,0 | 0,3 | | | |
| Beispiel 35 | | 49,4 | | | 20,0 | 10,0 | | 0,4 | 20,0 | 0,3 | | | |
| Beispiel 36 | | 49,4 | 15,0 | | | | | 0,4 | 20,0 | 0,3 | | 12,0 | |
| Beispiel 37 | | 57,3 | | | 15,0 | | | 0,4 | 20,0 | 0,3 | | 12,0 | |
| Beispiel 38 | | 53,3 | | | 15,0 | | 10,0 | 0,4 | 20,0 | 0,3 | | 6,0 | |

Tabelle 2: Prüfdaten

| | Gew.-% Phosphor | Tropfverhalten | Brandverhalten UL-94/1,6 mm |
|---|---|---|---|
| Beispiel 1 | 1,7 | tropft nicht | V-0 |
| Beispiel 2 | 1,7 | tropft nicht | V-0 |
| Beispiel 3 | 1,6 | tropft nicht | V-0 |
| Beispiel 4 | 1,3 | tropft nicht | V-0 |
| Beispiel 5 | 1,3 | tropft nicht | V-0 |
| Beispiel 6 | 1,3 | tropft nicht | V-0 |
| Beispiel 7 | 1,3 | tropft nicht | V-0 |
| Beispiel 8 | 1,3 | tropft nicht | V-0 |
| Beispiel 9 | 1,3 | tropft nicht | V-0 |
| Beispiel 10 | 1,3 | tropft nicht | V-0 |
| Beispiel 11 | 1,3 | tropft nicht | V-0 |
| Beispiel 12 | 1,3 | tropft nicht | V-0 |
| Beispiel 13 | 1,6 | tropft nicht | V-0 |
| Beispiel 14 | 1,5 | tropft nicht | V-0 |
| Beispiel 15 | 1,5 | tropft nicht | V-0 |
| Beispiel 16 | 1,0 | tropft nicht | V-0 |
| Beispiel 17 | 1,0 | tropft nicht | V-0 |
| Beispiel 18 | 1,0 | tropft nicht | V-0 |
| Beispiel 19 | 1,0 | tropft nicht | V-0 |
| Beispiel 20 | 1,6 | tropft nicht | V-0 |
| Beispiel 21 | 1,5 | tropft nicht | V-0 |
| Beispiel 22 | 1,5 | tropft nicht | V-0 |
| Beispiel 23 | 1,1 | tropft nicht | V-0 |
| Beispiel 24 | 1,0 | tropft nicht | V-0 |
| Beispiel 25 | 1,0 | tropft nicht | V-0 |

Tabelle 2: Prüfdaten, Fortsetzung

| | Gew.-% Phosphor | Tropfverhalten | Brandverhalten L-94/1,6 mm |
|---|---|---|---|
| Beispiel 26 | 1,6 | tropft nicht | V-0 |
| Beispiel 27 | 1,5 | tropft nicht | V-0 |
| Beispiel 28 | 1,5 | tropft nicht | V-0 |
| Beispiel 29 | 1,0 | tropft nicht | V-0 |
| Beispiel 30 | 1,0 | tropft nicht | V-0 |
| Beispiel 31 | 1,0 | tropft nicht | V-0 |
| Beispiel 32 | 1,0 | tropft nicht | V-0 |
| Beispiel 33 | 1,6 | tropft nicht | V-0 |
| Beispiel 34 | 1,5 | tropft nicht | V-0 |
| Beispiel 35 | 1,5 | tropft nicht | V-0 |
| Beispiel 36 | 1,1 | tropft nicht | V-0 |
| Beispiel 37 | 1,0 | tropft nicht | V-0 |
| Beispiel 38 | 1,0 | tropft nicht | V-0 |

Aus den Beispielen 1 bis 38 der Tabelle 1 und 2 geht hervor, daß die erfindungsgemäße Mischung mit Phosphin-, Phosphon- und Phosphorsäureestern von Bisphenolen und Novolaken, und Antidripping-Mitteln, sowie gegebenenfalls mit Thermoplasten mit überwiegend aromatischer Hauptkette und hoher Wärmeformbeständigkeit (Vicat B ≥180 °C), den thermoplastischen Polyestern einen Flammschutz nach UL-94 V-0 bei 1,6 mm dicken Prüfkörpern vermitteln.

Die Mitverwendung von Thermoplasten mit überwiegend aromatischer Hauptkette und hoher Wärmeformbeständigkeit (Vicat B ≥180 °C) erlaubt eine überproportionale Verringerung der für V-0/1,6 mm nach UL-94 benötigten Mengen an erfindungsgemäßen phosphorhaltigen Verbindungen.

Die Mitverwendung von Halogenverbindungen erlaubt eine weitere Verringerung der für V-0/1,6 mm benötigten Menge an erfindungsgemäßen phosphorhaltigen Estern.

**Patentansprüche**

1. Flammgeschützte, nicht tropfende Polyalkylenterephthalat-Formmassen, die auf 100 Gew.-Teile dieser Formmassen neben Polyalkylenterephthalat

   A. 5 bis 30 Gew.-Teile Ester von Säuren des Phosphors gemäß Formel (I),

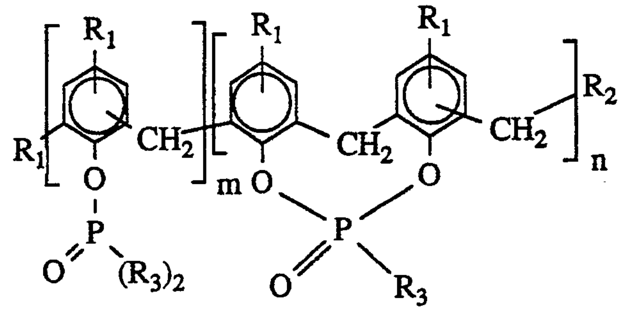 (I),

worin

$R_1$ für Wasserstoff, $C_1$-$C_8$-Alkyl, $C_7$-$C_{12}$-Aralkyl und/oder für gegebenenfalls durch $C_1$-$C_4$-Alkyl substituiertes Phenyl,

$R_2$ für 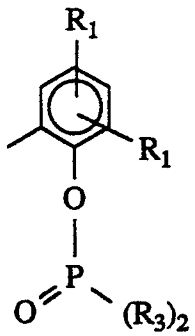 (II) oder 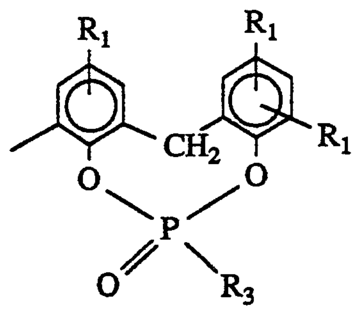 (III),

$R_3$ für gegebenenfalls durch $C_1$-$C_4$-Alkyl, $C_6$-$C_{10}$-Aryl oder $C_7$-$C_{12}$-Aralkyl substituiertes Phenoxy, für $C_1$-$C_4$-Alkyl, für $C_7$-$C_{12}$-Aralkyl und/oder für gegebenenfalls durch $C_1$-$C_4$-Alkyl substituiertes Phenyl,

m für Null oder ganze Zahlen von 1 bis 12,

n für Null oder ganze Zahlen von 1 bis 5,

stehen, mit der Maßgabe, daß, wenn

m gleich 0 ist, n mindestens 1 ist, und $R_2$ für (III) steht,

n gleich 0 ist, m mindestens 1 ist und $R_2$ für (II) steht,

und worin die Zahl der Phenylkerne des Novolaks der Formel (I) nicht höher als 12 ist

und

B) 0,01 bis 2,0 Gew.-Teile eines Antidrippingmittels

enthalten.

2. Flammgeschützte Polyalkylenterephthalat-Formmassen gemäß Anspruch 1, dadurch gekennzeichnet, daß als Antidripping-Mittel Tetrafluorethylen-Polymerisate eingesetzt werden.

3. Flammgeschüzte Polyalkylenterephthalat-Formmassen nach Ansprüchen 1 und 2, dadurch gekennzeichnet, daß die Formmassen Polysulfone, Polyethersulfone, Polyketone, Polyetherketone, Polyphenylenoxide und/oder Polyarylensulfide enthalten.

4. Verwendung der flammgeschützten Polyalkylenterephthalatformmassen zur Herstellung von Formkörpern.